# FASCICULE DE BREVET EUROPEEN

(11) **EP 1 501 694 B1**
(45) Date de publication et mention de la délivrance du brevet: **03.06.2009**
(21) Numéro de dépôt: 03747482.2
(22) Date de dépôt: 30.04.2003
(51) Int. Cl.: B60J 7/20

(54) **SYSTEME DE PLAGE ARRIERE ESCAMOTABLE POUR VEHICULE DECOUVRABLE A TOIT REPLIABLE**
EINZIEHBARES ABLAGESYSTEM FÜR KABRIOLETT MIT FALTDACH
RETRACTABLE PACKAGE SHELF SYSTEM FOR CONVERTIBLE VEHICLE WITH FOLDING ROOF

(30) Priorité: 03.05.2002 FR 0205568
(43) Date de publication de la demande: 02.02.2005
(73) Titulaire: Société Européenne de Brevets Automobiles, 75011 Paris (FR)
(72) Inventeur: Queveau, Gérard, F-79140 Cerizay (FR); Queveau, Paul, F-79140 Cerizay (FR); Guillez, Jean-Marc, F-79140 Cerizay (FR)
(74) Mandataire: Pichat, Thierry
(86) Numéro de dépôt international: PCT/FR2003/001365
(87) Numéro de publication internationale: WO 2003/093043

(56) Documents cités:
- US-A- 4 799 729
- US-B1- 6 364 396

## Description

La présente invention concerne un système de plage arrière escamotable pour véhicule découvrable à toit repliable selon le préambule de la revendication 1.

Un tel système de toit arrière escamotable est par exemple connu de US 2002/0041109 A, et comprend au moins une tablette et des moyens pour faire pivoter cette tablette autour d'un axe transversal par rapport au véhicule entre sa position normale et une position rangée.

Lorsque le système de plage arrière comporte une tablette unique s'étendant sur toute la dimension transversale de l'habitacle d'un véhicule, la dimension de cette tablette peut créer des difficultés si l'on veut placer cette tablette dans sa position escamotée à l'intérieur du coffre arrière dans l'espace de dimension transversale limitée situé entre les roues.

Pour cette raison, on connaît un système de plage arrière comprenant une tablette centrale et deux tablettes latérales disposées de part et d'autre de la tablette centrale et mobiles par rapport à celle-ci, le système comportant en outre des moyens pour déplacer les tablettes latérales par rapport à la tablette centrale lorsque l'on fait pivoter la tablette centrale dans un sens ou dans l'autre.

Les systèmes connus de plage arrière escamotable avec tablettes latérales mobiles sont en général encombrants, peu esthétiques et peu fiables.

Le but de la présente invention est de proposer un système de plage arrière escamotable du type précité de structure simple présentant, dans la position normale de la plage arrière, un aspect esthétique agréable à la vue, et n'occupant, dans chacune des positions de la plage arrière comme pendant le déplacement de celle-ci d'une position à l'autre, qu'un volume limité qui n'oblige pas l'utilisateur du véhicule à libérer complètement l'arrière de ce dernier.

Suivant la présente invention, le système de plage arrière escamotable du type précité est caractérisé selon les termes de la revendication 1.

Dans ce mouvement de pivotement autour d'un axe sensiblement perpendiculaire à la surface supérieure de la tablette centrale pour être rangée sensiblement sous cette dernière, chaque tablette latérale est mobile dans un espace qui est situé sous la tablette centrale et qui est le plus souvent inoccupé ou difficilement utilisable.

La tablette latérale correspondante peut ainsi être escamotée pratiquement complètement sous la tablette centrale.

D'autre particularités et avantages de la présente invention apparaîtront encore dans la description détaillée ci-après.

Au dessins annexés, donnés uniquement à titre d'exemples non limitatifs :
- la figure 1 est une vue schématique partielle en élévation d'un véhicule découvrable à toit repliable comprenant un système de plage arrière selon la présente invention ;
- La figure 2 est une vue de dessus schématique partielle du véhicule de la figure 1 ;
- La figure 3 est une vue schématique partielle en perspective d'un mode de réalisation d'un système de plage arrière escamotable selon la présente invention ;
- La figure 4 est une vue partielle en coupe sensiblement selon IV-IV à la figure 3 ;
- La figure 5 est une vue semblable à la figure 4 d'un autre mode de réalisation de la présente invention, la tablette latérale étant dans sa position normale ;
- La figure 6 est une vue semblable à la figure 5, la tablette latérale étant dans sa position pivotée escamotée sous la tablette centrale ;
- La figure 7 est une vue schématique partielle en perspective de l'organe de pivotement complémentaire représenté aux figures 5 et 6 ;
- La figure 8 est une vue schématique en coupe transversale de l'organe de pivotement complémentaire de la figure7 ;
- La figure 9 est une vue schématique en élévation représentant trois positions successives d'une plage arrière selon un mode de réalisation de la présente invention ;
- La figure 10 est une vue semblable à la figure 9 d'un autre mode de réalisation de la présente invention;
- La figure 11 est une vue schématique en perspective du mode de réalisation de la figure 10 ;
- Les figures 12, 13 et 14 sont des vues schématiques partielles en perspective représentant la partie gauche d'un autre mode de réalisation de la présente invention dans les trois positions schématisées à la figure 9 ;
- Les figures 15, 16 et 17 sont des vues partielles schématiques de dessus représentant respectivement la partie droite de la plage arrière schématisée aux figures 12 à 14 dans chacune des positions représentées sur ces figures.

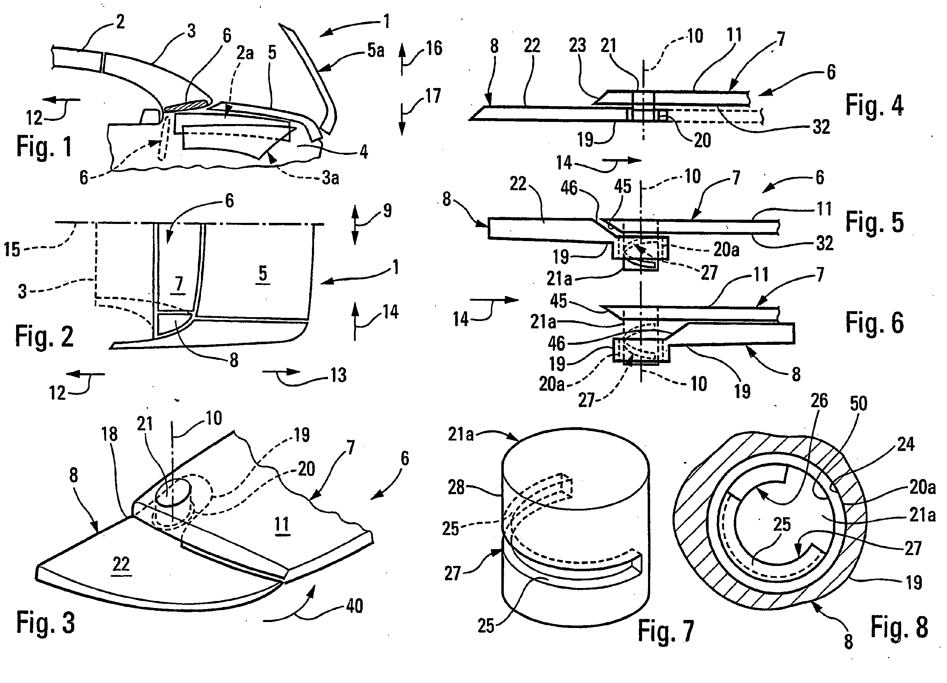

Dans le mode de réalisation schématisé aux figures 1 et 2, on a représenté un véhicule découvrable 1 à toit repliable comprenant une partie de toit avant 2 et une partie de toit arrière 3 qui sont mobiles par rapport au véhicule et l'une par rapport à l'autre pour pouvoir être repliées respectivement dans les positions 2a et 3a à l'intérieur du coffre arrière 4 dont le capot 5 peut s'ouvrir de l'avant vers l'arrière dans la position 5a pour permettre le passage des deux parties de toit.

Le véhicule 1 comporte un système de plage arrière 6 qui est représenté à la figure 1 en traits pleins dans sa position normale, sensiblement horizontale, et en tirets dans sa position escamotée, dans cet exemple une position sensiblement verticale à l'avant du coffre arrière.

Comme schématisé à la figure 2, le système de plage arrière comprend une tablette centrale 7 et deux tablettes latérales 8 disposées de part et d'autre de la tablette centrale 7, dans la direction transversale 9 du véhicule, et mobiles par rapport à cette tablette centrale 7.

Le système de plage arrière 6 comporte des moyens pour faire pivoter la tablette centrale 7 dans les deux sens autour d'un axe transversal, c'est-à-dire parallèle à la direction transversale 9, entre sa position normale, sensiblement horizontale, représentée aux figures 1 et 2, et une position escamotée rangée à l'intérieur du coffre arrière 4 et permettant de replier les deux parties 2, 3 du toit repliable à l'intérieur du coffre arrière 4.

Le système de plage arrière 6 comporte également des moyens pour déplacer les tablettes latérales 8 par rapport à la tablette centrale 7.

Suivant la présente invention, et comme schématisé par exemple à la figure 3, chaque tablette latérale 8 est montée de manière pivotante autour d'un axe 10 sensiblement perpendiculaire à la surface supérieure 11 de la tablette centrale 7. L'axe 10 est agencé de manière telle que chaque tablette latérale 8, en position pivotée, est rangée sensiblement sous la tablette centrale 7. Le système 6 comporte en outre avantageusement des moyens pour commander le pivotement de chaque tablette latérale 8 par_rapport à la tablette centrale 7 (flèche 40) pendant le mouvement de pivotement de ladite tablette centrale 7 de sa position normale à sa position escamotée, et vice-versa.

Dans ce qui suit, on utilisera les sens suivants qui sont définis en référence au véhicule schématisé aux figures 1 et 2, à savoir le sens vers l'avant, schématisé par la flèche 12, le sens vers l'arrière schématisé par la flèche 13, le sens vers l'intérieur du véhicule, schématisé par la flèche 14, dirigée vers le plan de symétrie longitudinal 15 schématisé à la figure 2, le sens vers le haut, schématisé par la flèche 16, le sens vers le bas, schématisé par la flèche 17.

Comme schématisé aux figures 3 et 4, chaque tablette latérale 8 comporte, prés de son coin intérieur avant 18 un prolongement 19 s'étendant transversalement vers l'intérieur, dans le sens de la flèche 14, sous la tablette centrale 7. Le prolongement 19 porte un organe de pivotement 20 adapté à coopérer avec un organe de pivotement complémentaire coaxial 21 fixé sous la tablette centrale 7.

L'un quelconque de l'organe de pivotement 20 et de l'organe de pivotement complémentaire 21 est un organe mâle, l'autre étant un organe femelle annulaire adapté à entourer l'organe mâle. La description ci-dessous est faite dans l'hypothèse où l'organe de pivotement complémentaire 21 est un organe cylindrique mâle coopérant avec l'organe de pivotement 20 annulaire porté par le prolongement 19 de la tablette latérale 8.

Dans le mode de réalisation de la figure 4, chaque tablette latérale 8 s'étend toute entière sous le niveau de la tablette centrale 7 de sorte que la surface supérieure 22 de chaque tablette latérale 8 reste dans un plan fixe par rapport à l'axe de pivotement 10 de ladite tablette latérale 8. Le bord longitudinal latéral 23 de chaque côté de la tablette centrale 7 est avantageusement taillé en biseau s'étendant de préférence vers l'extérieur et vers le bas.

Dans le mode de réalisation des figures 5 et 6, l'organe de pivotement 20a, qui est fixé sur la tablette latérale 8 dans une ouverture 24 correspondante aménagée dans le prolongement 19 correspondant, et l'organe de pivotement complémentaire 21a, qui est fixé sous la tablette centrale 7, sont agencés de manière à constituer des moyens de guidage hélicoïdaux coaxiaux adaptés à déplacer la tablette latérale 8 axialement vers le bas pendant le pivotement de celle-ci.

Dans cet exemple, l'organe de pivotement complémentaire 21a fixé sous la tablette centrale 7 et l'organe de pivotement 20a fixé sur la tablette latérale 8 comportent respectivement, l'un au moins une surface de came hélicoïdale 25, l'autre un moyen formant galet suiveur de came 26 adapté à prendre appui sur la surface de came hélicoïdale 25.

La surface de came 25 peut appartenir à une rainure ou à une nervure, le suiveur de came 26 ayant une structure complémentaire correspondante.

Dans l'exemple représenté, la surface de came hélicoïdale 25 appartient à une rainure 27 creusée dans la surface périphérique 28 de l'organe complémentaire 21a, et le suiveur de came 26 est un doigt faisant saillie radialement vers l'intérieur par rapport à la surface cylindrique intérieure 50 de l'organe 20a et engagé dans la rainure 27. La rainure 27 comporte deux surfaces hélicoïdales 25 opposées agissant sur le suiveur 26, l'une dans un sens de pivotement de la tablette latérale 8, l'autre dans le sens de pivotement opposé.

La rainure 27 est ménagée avantageusement de manière telle que la tablette latérale 8 correspondante a, dans sa position normale, sa surface supérieure 22 sensiblement dans l'alignement de la surface supérieure 11 de la tablette centrale 7.

Les bords longitudinaux latéraux respectifs 45 et 46 de la tablette centrale 7 et de la tablette latérale 8 sont avantageusement taillés en biseau s'étendant de préférence vers l'intérieur et vers le bas, contrairement au bord 23 de la figure 4.

Toute autre combinaison de moyens remplissant la même fonction pour aboutir au même résultat est également utilisable.

Tout ce qui précède est valable quelle que soit la façon dont la tablette centrale 7 pivote sur le véhicule 1.

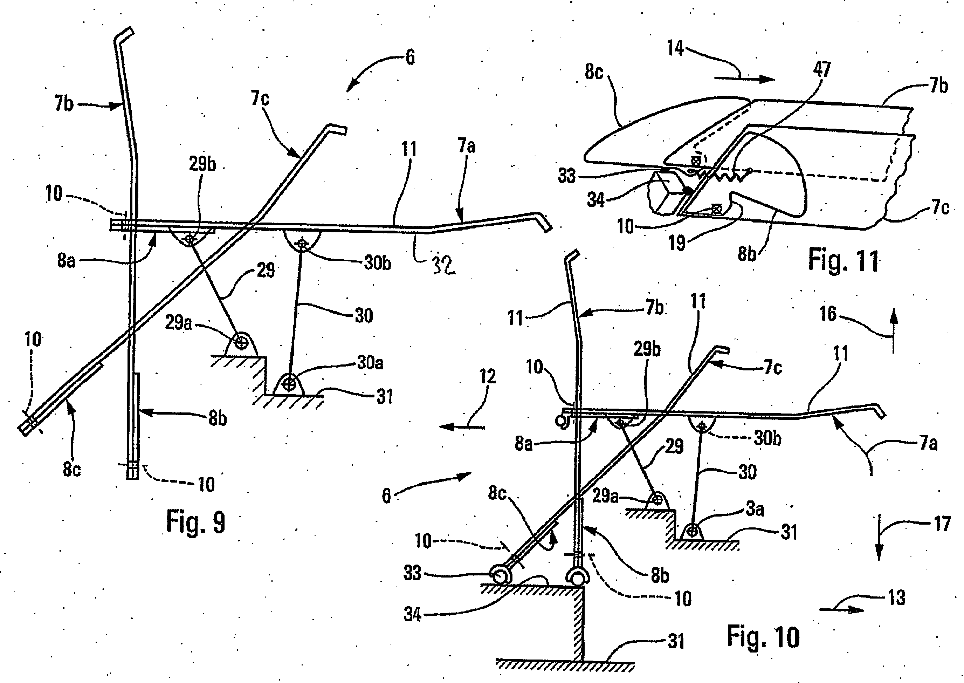

Dans le mode de réalisation schématisé à la figure 9, la tablette centrale 7 est portée, de chaque côté du véhicule 1, par deux bras de pivotement 29, 30. Chaque bras 29, 30 est articulé, à une première extrémité 29a, 30a, sur la carrosserie 31 du véhicule, et à son autre extrémité 29b, 30b, sous la surface inférieure 32 de la tablette centrale 7.

Les bras 29, 30 sont agencés de façon telle que la tablette centrale 7 pivote vers le bas (flèche 17) et vers l'avant (flèche 12) pour passer de sa position normale 7a à sa position pivotée 7b, sensiblement verticale, en passant par une position intermédiaire 7c.

Dans le mode de réalisation schématisé aux figures 10 et 11, chaque tablette latérale 8 porte un galet 33 adapté à prendre appui sur une surface de guidage 34 portée par la carrosserie 31 du véhicule 1 et à glisser ou à rouler le long de ladite surface de guidage 34 lors du pivotement de la tablette centrale 7 pour commander le pivotement de la tablette latérale 8 par rapport à la tablette centrale 7.

Dans l'exemple représenté, le galet 33 entre en contact avec la surface de guidage 34 dans la position 7c de la tablette centrale 7, et glisse ou roule le long de la surface de guidage 34, sensiblement vers l'arrière, lorsque la tablette centrale 7 passe de sa position intermédiaire 7c à sa position pivotée 7b.

Un ressort d'un type connu quelconque, schématisé en 47, est ménagé de façon à solliciter en permanence chaque tablette latérale 8 vers sa position normale 8a dans laquelle elle s'étend vers l'extérieur dans la direction transversale 9 par rapport à la tablette centrale 7 (voir figure 11).

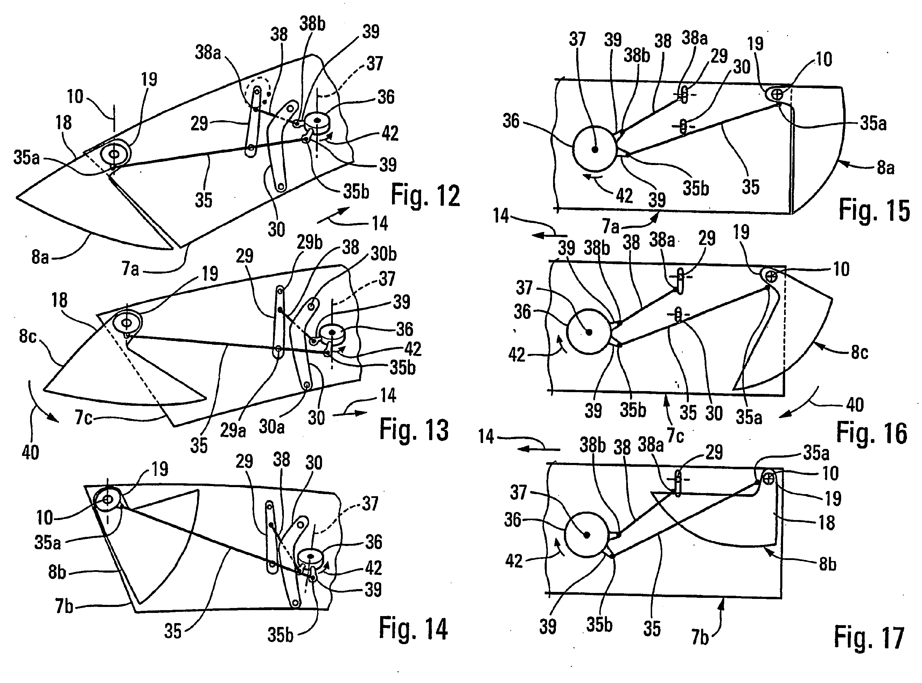

Dans le mode de réalisation des figures 12 à 17, chaque tablette latérale 8 est reliée de façon articulée à une première extrémité 35a d'une première tringle 35 dont l'autre extrémité 35b est reliée de façon articulée à un organe de commande 36 solidaire de la tablette centrale 7, et le système 6 comprend des moyens adaptés à déplacer l'organe de commande 36 pendant le pivotement de la tablette centrale 7 pour commander le pivotement de la tablette latérale 8 par rapport à la tablette centrale 7.

Dans l'exemple représenté, l'organe de commande 36 est monté sous la tablette centrale 7 de manière à pivoter autour d'un axe 37 sensiblement perpendiculaire à la tablette centrale 7, et est relié de façon articulée à une extrémité 38b d'une seconde tringle 38 dont l'autre extrémité 38a est articulée sur l'un des bras 29, 30, dans l'exemple représenté le bras 29.

Dans cet exemple, l'organe de commande 36 présente à sa périphérie deux oreilles 39 en saillie radialement vers l'extérieur sur lesquelles sont articulées respectivement les extrémités 35b, 38b des deux tringles 35 et 38.

Ainsi, lorsque la tablette centrale 7 pivote vers l'avant et vers le bas, dans le sens de la flèche 41 à la figure 9, la seconde tringle 38 fait tourner l'organe de commande 36 dans le sens de la flèche 42, le sens anti-horaire aux figures 12 à 14, le sens horaire aux figures 15 à 17, ce qui a pour résultat de tirer la première tringle 35 vers l'intérieur (flèche 14) de façon à faire pivoter la tablette latérale 8 dans le sens de la flèche 40, vers l'intérieur (flèche 14) et vers l'arrière (flèche 13)

Bien entendu, la présente invention n'est pas limitée aux modes de réalisation que l'on vient de décrire, et on peut apporter à ceux-ci de nombreux changements et modifications sans sortir du domaine de l'invention.

On peut évidemment prévoir sous la tablette centrale 7 des moyens quelconques indépendants, à commande électrique par exemple, pour commander le pivotement des tablettes latérales 8 ou des organes 36.

On peut évidemment prévoir, dans le mode de réalisation des figures 12 à 17, un ressort analogue au ressort 47 de la figure 11 et sollicitant en permanence la tablette latérale 8 dans un sens ou dans l'autre pour faciliter le pivotement de cette dernière dans le sens préférentiel souhaité.

Au lieu d'utiliser un organe pour chaque tablette latérale 8, on peut utiliser un organe 36 unique pour actionner les deux tablettes latérales 8, en prévoyant une tringle 38 unique pour faire pivoter cet organe 36, et en prévoyant pour l'une des tablettes latérales 8, par exemple la tablette de droite des figures 15 à 17, une oreille 39 dans une position diamétralement opposée à celle représentée sur ces figures pour actionner la tringle 35 correspondante, avantageusement dans le même sens de traction pour faire pivoter la tablette latérale 8 vers sa position pivotée. Dans ce cas, il peut être utile de prévoir un ressort (non représenté) sollicitant en permanence chaque tablette latérale 8 vers sa position normale, pour faciliter le retour vers cette position normale.

## Revendications

1. Système de plage arrière escamotable (6) pour véhicule découvrable (1) à toit repliable, ce système (6) comprenant une tablette centrale (7) et deux tablettes latérales (8) disposées de part et d'autre de la tablette centrale (7) et mobiles par rapport à celle-ci, ainsi que des moyens pour faire pivoter la tablette centrale (7) dans les deux sens autour d'un axe transversal entre sa position normale et une position rangée permettant de replier le toit repliable à l'intérieur dudit coffre arrière (4), et des moyens pour déplacer les tablettes latérales (8) par rapport à la tablette centrale (7) ; chaque tablette latérale (8) comportant, près de son coin intérieur avant (18), un prolongement (19) s'étendant transversalement vers l'intérieur sous la tablette centrale (7) et portant un organe de pivotement (20, 20a) adapté à coopérer avec un organe de pivotement complémentaire coaxial (21, 21a) fixé sous la tablette centrale (7) ; et chaque tablette latérale (8) étant montée de façon pivotante autour d'un axe (10) commun aux deux organes de pivotement (20, 20a 21, 21a) sensiblement perpendiculaire à la surface supérieure (11) de la tablette centrale (7) et agencé de manière telle que chaque tablette latérale (8), en position pivotée, est rangée sensiblement sous la tablette centrale (7), **caractérisé en ce que** lesdits moyens pour faire pivoter la tablette centrale sont adaptés pour que cette tablette centrale (7) soit rangée à l'intérieur du coffre arrière (4).

2. Système de plage arrière selon la revendication 1, **caractérisé en ce que**, dans la position normale de la tablette centrale (7), chaque tablette latérale (8) s'étend toute entière sous le niveau de la tablette centrale (7) de sorte que la surface supérieure (22) de chaque tablette latérale (8) reste dans un plan fixe par rapport à l'axe de pivotement (10) de ladite tablette latérale (8), le bord longitudinal latéral (23) correspondant de la tablette centrale (7) étant avantageusement taillé en biseau.

3. Système de plage arrière selon la revendication 1, **caractérisé en que** l'organe de pivotement (20a) fixé sur la tablette latérale (8) et l'organe de pivotement complémentaire (21a) fixé sous la tablette centrale (7) sont agencés de manière à constituer des moyens de guidage hélicoïdaux coaxiaux adaptés à déplacer la tablette latérale (8) axialement pendant le pivotement de celle-ci, de préférence de manière telle que la tablette latérale (8) a, dans sa position normale, sa surface supérieure (22) sensiblement dans l'alignement de la surface supérieure (11) de la tablette centrale (7).

4. Système de plage arrière selon la revendication 3, **caractérisé en ce que** l'organe de pivotement complémentaire (21a) fixé sous la tablette centrale (7) et l'organe de pivotement (20a) fixé sur la tablette latérale (8) comportent respectivement, l'un une surface de came hélicoïdale (25), l'autre un moyen formant galet suiveur de came (26) adapté à prendre appui sur ladite surface de came hélicoïdale (25).

5. Système de plage arrière selon l'une quelconque des revendications précédentes, **caractérisé en ce que** la tablette centrale (7) est portée, de chaque côté, par deux bras de pivotement (29, 30), chacun des bras (29, 30) étant articulé, à une première extrémité (29a, 30a), sur la carrosserie (31) du véhicule, et à son autre extrémité (29b, 30b), sous la surface inférieure(32) de la tablette centrale (7), et **en ce que** les bras (29, 30) sont agencés de façon telle que la tablette centrale (7) pivote vers le bas et vers l'avant pour passer de sa position normale à sa position pivotée.

6. Système de plage arrière selon la revendication 5, **caractérisé en ce que** chaque tablette latérale (8) porte un galet (33) adapté à prendre appui sur une surface de guidage (34) portée par la carrosserie (31) du véhicule (1) et à glisser le long de ladite surface de guidage (34) lors du pivotement de la tablette centrale (7) pour commander le pivotement de ladite tablette latérale (8) par rapport à la tablette centrale (7).

7. Système de plage arrière selon la revendication 5, **caractérisé en ce que** chaque tablette latérale (8) est reliée de façon articulée à une extrémité (35a) d'une première tringle (35) dont l'autre extrémité (35b) est reliée de façon articulée à un organe de commande (36) solidaire de la tablette centrale (7), et **en ce que** le système (6) comprend des moyens adaptés à déplacer l'organe de commande (36) pendant le pivotement de la tablette centrale (7) pour commander le pivotement de la tablette latérale (8) par rapport à la tablette centrale (7).

8. Système de plage arrière selon la revendication 7, **caractérisé en ce que** l'organe de commande (36) est monté sous la tablette centrale (7) de manière à pivoter autour d'un axe (37) sensiblement perpendiculaire à cette tablette centrale (7), et est relié de façon articulée à une extrémité (38b) d'une seconde tringle (38) dont l'autre extrémité (38a) est articulée sur l'un des bras (29, 30).

9. Système de plage arrière selon l'une des revendications précédentes, **caractérisé en ce qu'**il comprend en outre des moyens pour commander le pivotement de chaque tablette latérale (8) par rapport à la tablette centrale (7) pendant le mouvement de pivotement de ladite tablette centrale (7).

## Claims

1. Retractable parcel shelf system (6) for a convertible vehicle (1) with a folding roof, this system (6) comprising a central panel (7) and two side panels (8), one on either side of the central panel (7) and both being moveable relative to the latter, and means for pivoting the central panel (7) in both directions about a transverse axis between its normal position and a stowed position allowing the folding roof to be folded into the rear boot (4), and means for moving the side panels (8) relative to the central panel (7); each side panel (8) comprising, near its forward inner corner (18), an extension (19) extending transversely towards the interior underneath the central panel (7) and supporting a pivot member (20, 20a) able to engage with a coaxial complementary pivot member (21, 21a) fixed underneath the central panel (7); and each side panel (8) being mounted so as to pivot about an axis (10) common to both pivot members (20, 20a; 21, 21a) and approximately perpendicular to the upper surface (11) of the central panel (7) and so arranged that each side panel (8), in the pivoted position, is stowed essentially underneath the central panel (7); said system being **characterized in that** the means for pivoting the central panel are adapted for having said central panel (7) stowed inside the rear boot (4).

2. Parcel shelf system according to Claim 1, **characterized in that**, in the normal position of the central panel (7), each side panel (8) extends entirely underneath the level of the central panel (7) in such a way that the top surface (22) of each side panel (8) remains in a fixed plane relative to the pivot axis (10) of said side panel (8), the corresponding lateral longitudinal edge (23) of the central panel (7) being advantageously bevelled.

3. Parcel shelf system according to Claim 1, **characterized in that** the pivot member (20a) fixed to the side panel (8) and the complementary pivot member (21a) fixed underneath the central panel (7) are arranged in such a way as to form coaxial helical guide means suitable for moving the side panel (8) axially during its pivoting, preferably in such a way that the top surface (22) of the side panel (8) is, when the latter is in its normal position, essentially flush with the top surface (11) of the central panel (7).

4. Parcel shelf system according to Claim 3, **characterized in that** the complementary pivot member (21a) fixed underneath the central panel (7) and the pivot member (20a) fixed to the side panel (8) comprise, respectively, a helical cam surface (25), and a cam follower roller means (26) able to bear on said helical cam surface (25).

5. Parcel shelf system according to any one of the preceding claims, **characterized in that** the central panel (7) is supported, on each side, by two pivot arms (29, 30), each arm (29, 30) being hinged at a first end (29a, 30a) to the vehicle bodywork (31), and at its other end (29b, 30b) underneath the bottom surface (32) of the central panel (7), and **in that** the arms (29, 30) are arranged in such a way that the central panel (7) pivots downwards and forwards to pass from its normal position to its pivoted position.

6. Parcel shelf system according to Claim 5, **characterized in that** each side panel (8) supports a roller (33) able to bear on a guide surface (34) carried by the bodywork (31) of the vehicle (1) and able to slide along said guide surface (34) during the pivoting of the central panel (7) in order to pivot said side panel (8) relative to the central panel (7).

7. Parcel shelf system according to Claim 5, **characterized in that** each side panel (8) is connected in a hinged manner to one end (35a) of a first link (35), whose other end (35b) is connected in a hinged manner to a control member (36) mounted on the central panel (7), and **in that** the system (6) comprises means able to move the control member (36) during the pivoting of the central panel (7) in order to cause the side panel (8) to pivot relative to the central panel (7).

8. Parcel shelf system according to Claim 7, **characterized in that** the control member (36) is mounted underneath the central panel (7) in such a way as to pivot about an axis (37) essentially perpendicular to this central panel (7), and is connected in a hinged manner to one end (38b) of a second link (38), whose other end (38a) is hinged to one of the arms (29, 30).

9. Parcel shelf system according to any one of the preceding claims, **characterized in that** it also comprises means for pivoting each side panel (8) relative to the central panel (7) during the pivoting movement of said central panel (7).

## Patentansprüche

1. Versenkbares Heckablagesystem (6) für ein aufdeckbares Fahrzeug (1) mit Faltdach, wobei dieses System (6) eine zentrale Platte (7) und zwei seitliche Platten (8) umfasst, die beiderseits der zentralen Platte (7) angeordnet und in Bezug zu diesem beweglich sind, sowie eine Einrichtung, um die zentrale Platte (7) in beiden Richtungen um eine Querachse zwischen ihrer normalen Position und einer verstauten Position schwenken zu lassen, was ermöglicht, das faltbare Dach in das Innere des heckseitigen Kofferraumes (4) zu falten, und eine Einrichtung, um die seitlichen Platten (8) in Bezug zu der zentralen Platte (7) zu verschieben; wobei jede seitliche Platte (8) nahe ihrer vorderen innen liegenden Ecke (18) eine Verlängerung (19) umfasst, die sich quer nach innen unter die zentrale Platte (7) erstreckt und ein Schwenkelement (20, 20a) trägt, das so ausgebildet ist, dass dieses mit einem komplementären koaxialen Schwenkelement (21, 21a) zusammenwirkt, das unter der zentralen Platte (7) befestigt ist; und wobei jede seitliche Platte (8) schwenkbar um eine Achse (10) angebracht ist, die gemeinsam mit den Schwenkelementen (20, 20a; 21, 21a) ist und im Wesentlichen senkrecht zur Oberseite (11) der zentralen Platte (7) angebracht und so angeordnet ist, dass jede seitliche Platte (8) in geschwenkter Position im Wesentlichen unter der zentralen Platte (7) angeordnet ist, **dadurch gekennzeichnet, dass** die Einrichtung, um die zentrale Platte schwenken zu lassen, um die zentrale Platte (7) im Inneren des heckseitigen Kofferraumes (4) anzuordnen, ausgebildet ist.

2. Heckablagensystem nach Anspruch 1, **dadurch gekennzeichnet, dass** sich in der normalen Position der zentralen Platte (7) jede seitliche Platte (8) vollständig unter das Niveau der zentralen Platte (7) erstreckt, derart, dass die Oberseite (22) jeder seitlichen Platte (8) in einer festen Ebene in Bezug zur Schwenkachse (10) der seitlichen Platte (8) ruht, wobei der korrespondierende seitliche Längsrand (23) der zentralen Platte (7) in vorteilhafter Weise abgeschrägt ist.

3. Heckablagensystem nach Anspruch 1, **dadurch gekennzeichnet, dass** das Schwenkelement (20a), das an der seitlichen Platte (8) befestigt ist, und das komplementäre Schwenkelement (21a), das unter der zentralen Platte (7) befestigt ist, derart angeordnet sind, dass diese eine koaxiale schraubenförmige Führungseinrichtung bilden, die so ausgebildet ist, dass diese die seitliche Platte (8) während des Schwenkvorgangs derselben axial verschiebt, vorzugsweise derart, dass die seitliche Platte (8) in ihrer normalen Position mit ihrer Oberseite (22) im Wesentlichen in einer Flucht mit der Oberseite (11) der zentralen Platte (7) liegt.

4. Heckablagensystem nach Anspruch 3, **dadurch gekennzeichnet, dass** das komplementäre Schwenkelement (21a), das unter der zentralen Platte (7) befestigt ist, und das Schwenkelement (20a), das an der seitlichen Platte (8) befestigt ist, jeweils einerseits eine schraubenförmige Nockenfläche (25) und andererseits eine Nockenlaufrolle (26) umfasst, die so ausgebildet ist, dass sie auf der schraubenförmigen Nockenfläche (25) anliegen kann.

5. Heckablagensystem nach einem der vorhergehenden Ansprüche, **dadurch gekennzeichnet, dass** die zentrale Platte (7) beidseitig durch zwei Schwenkarme (29, 30) abgestützt ist, wobei jeder der Arme (29, 30) an einem ersten Ende (29a, 30a) an die Karosserie (31) des Fahrzeugs und mit seinem anderen Ende (29b, 30b) unter der Unterseite (32) der zentralen Platte (7) angelenkt ist, und dass die Arme (29, 30) derart angeordnet sind, dass die zentrale Platte (7) nach unten und nach vorne schwenkt, um aus ihrer normalen Position in ihre Schwenkposition zu gelangen.

6. Heckablagensystem nach Anspruch 5, **dadurch gekennzeichnet, dass** jede seitliche Platte (8) eine Rolle (33) trägt, die so ausgebildet ist, dass diese auf einer Führungsfläche (34) anliegen kann, die durch die Karosserie (31) des Fahrzeugs (1) abgestützt ist, und dass sie entlang dieser Führungsfläche (34) bei dem Schwenkvorgang der zentralen Platte (7) gleiten kann, um den Schwenkvorgang der seitlichen Platte (8) in Bezug zu der zentralen Platte (7) zu steuern.

7. Heckablagensystem nach Anspruch 5, **dadurch gekennzeichnet, dass** jede seitliche Platte (8) in gelenkiger Weise mit einem Ende (35a) eine erste Stange (35) verbunden ist, dessen weiteres Ende (35b) in gelenkiger Weise mit einem Steuerelement (36) verbunden ist, das an der zentralen Platte (7) befestigt ist, und dass das System (6) Mittel umfasst, die so ausgebildet sind, dass sie das Steuerelement (36) während des Schwenkvorgangs der zentralen Platte (7) verschieben, um den Schwenkvorgang der zentralen Platte (8) in Bezug zu der zentralen Platte (7) zu steuern.

8. Heckablagensystem nach Anspruch 7, **dadurch gekennzeichnet, dass** das Steuerelement (36) unter der zentralen Platte (7) in der Weise angebracht ist, dass dieses um eine Achse (37) im Wesentlichen senkrecht zu dieser zentralen Platte (7) schwenken kann, und in gelenkiger Weise mit einem Ende (38b) einer zweiten Stange (38) verbunden ist, dessen weiteres Ende (38a) an einen der Arme (29, 30) angelenkt ist.

9. Heckablagensystem nach einem der vorhergehenden Ansprüche, **dadurch gekennzeichnet, dass** dieses ferner eine Einrichtung zum Steuern des Schwenkvorgangs jeder seitlichen Platte (8) in Bezug zu der zentralen Platte (7) während der Schwenkbewegung der zentralen Platte (7) umfasst.
